# EUROPÄISCHE PATENTSCHRIFT

(11) **EP 1 895 213 B1**
(45) Veröffentlichungstag und Bekanntmachung des Hinweises auf die Patenterteilung: **23.12.2009**
(21) Anmeldenummer: 06018441.3
(22) Anmeldetag: 04.09.2006
(51) Int. Cl.: F16K 17/04

(54) **Ventil**
Valve
Soupape

(43) Veröffentlichungstag der Anmeldung: 05.03.2008
(73) Patentinhaber: HAWE Hydraulik SE, 81673 München (DE)
(72) Erfinder: Neumair, Georg, 85402 Thalhausen (DE); Haas, Alexander, 85469 Walpertskirchen (DE)
(74) Vertreter: Grünecker, Kinkeldey, Stockmair & Schwanhäusser Anwaltssozietät

(56) Entgegenhaltungen:
- EP-A1- 1 380 779
- WO-A-01/51835
- DE-A1- 4 240 838
- DE-A1- 4 407 762
- DE-A1- 19 955 083
- FR-A- 1 049 033
- US-A- 4 057 072
- US-A- 5 050 636

## Beschreibung

Die Erfindung betrifft ein Ventil gemäß Oberbegriff des Patentanspruchs 1.

Derartige Ventile werden häufig als Vorspann- oder Druckbegrenzungsventil verwendet, und zwar entweder im eigenen Ventilblock oder als sogenannte Einschraub-Ventilpatrone. Wenn ein solches Ventil anspricht, d.h., das Sitzventilglied gegen die Kraft der Feder vom Sitz abzuheben beginnt, entstehen aus der Strömungsdynamik, insbesondere bei moderaten Druckänderungen auf der Hochdruckseite, häufig Vibrationen des Ventilsitzgliedes, die zu einem deutlich hörbaren Ventilschnarren oder -pfeifen führen, das unerwünscht ist und schädliche Einfluss auf die Lebensdauer nimmt. Dieses Betriebsgeräusch lässt sich selbst mit aufwändigen Dämpfungsmaßnahmen durch den Dämpfungskolben bisher nicht vermeiden. In Druckbegrenzungsventilen des Typs Sv oder MV der Anmelderin befindet sich der Dämpfungskolben an der Hochdruckseite, weil angenommen wurde, dass dann die Dämpfwirkung besser wäre. Dennoch kann auch so unter ungünstigen Betriebsbedingungen ein störendes Betriebsgeräusch nicht zuverlässig vermieden werden, selbst wenn die Geometrie zwischen dem Sitzventilglied (mit konischer oder kugeliger Sitzfläche) und dem Sitz bzw. in Bereichen angrenzend an den Sitz mit erheblichem Aufwand gestaltet ist. Im Hinblick auf eine möglichst wirksame Dämpfung ist der Herstellungsaufwand für die bekannten Ventile hoch und teuer und bestehen diese Ventile aus vielen sehr sorgfältig bearbeiteten Teilen.

Ein aus US 5 050 636 A bekanntes Druckbegrenzungsventil weist als Dämpfungskolben einen im Gehäuse geführten Stufenkolben auf, der einen Schaft des Sitzventilgliedes führt und mit der abgestuften Außenseite im Gehäuse eine Dämpfungskammer begrenzt. Der Schaft des Sitzventilgliedes ist hohl und enthält eine Drosselbohrung, die den Hochdruck vom Inneren des Sitzes in eine Hochdruckkammer beim Stufenkolben und oberhalb des Endes des Schaftes überträgt. Am unteren Ende des Stufenkolbens ist in einer mit der Niederdruckseite verbundenen Kammer die Ventilschließfeder angeordnet. Der Dämpfungskolben erhöht unter dem Hochdruck beim Öffnen des Druckbegrenzungsventils momentan die Kompression der Ventilschließfeder. Das Sitzventilglied wird in Schließrichtung zusätzlich auf der Querschnittsfläche des Schaftes und parallel zur Kraftwirkung der Ventilschließfeder beaufschlagt.

Bei einem aus DE 42 40 838 A bekannten Zwei-Wege-Einbauventil wird das Sitzventilglied von der Ventilschließfeder und zusätzlich vom Hochdruck in Ventilschließrichtung beaufschlagt. Mit dem als Hohlkolben ausgebildeten Sitzventilglied ist ein Schaft verbunden, der mit Steuerdruck beaufschlagbar ist.

Bei einem aus WO 01/51835 A bekannten Sitzventil ist in der Ausführungsform von Fig. 2 das als Hohlkolben ausgebildete Sitzventilglied in Verschließrichtung von der Schließfeder und zusätzlich auf einer Kreisringfläche von durch eine Drosselöffnung im Sitzventilglied übertragenem Hochdruck beaufschlagt. Der Hohlkolben ist an zwei axial beabstandeten Führungsbereichen in der Niederdruckkammer geführt und begrenzt mit der Innenwand der Niederdruckkammer eine die Ventilschließfeder enthaltende Ringkammer. Diese Ringkammer ist über großbemessene Querbohrungen im Hohlkolben mit dem Innenraum des Hohlkolbens und damit der Niederdruckseite verbunden. Ein Dämpfungskolben ist nicht vorgesehen.

Der Erfindung liegt die Aufgabe zugrunde, ein Ventil der eingangs genannten Art zu schaffen, bei dessen Ansprechen ein unerwünschtes Betriebsgeräusch vermieden wird, und das sich kostengünstig und einfach herstellen lässt.

Die gestellte Aufgabe wird mit den Merkmalen des Patentanspruchs 1 gelöst.

Aus dem Zusammenspiel zwischen dem Sitzventilglied, das mit dem Dämpfungskolben starr verbunden und mit der Ventil-Feder in der Niederdruckkammer angeordnet ist, und den zwei axial relativ weit beabstandeten separaten, gleichdurchmessrigen Führungsbereichen des Dämpfungskolbens, sowie mit dem Kraftangriff der Feder im Dämpfungskolben möglichst nahe beim Sitzventilglied, ergibt sich unerwartet eine weitestgehend geräuschfreie Operation des Ventils. Der genaue Grund hierfür ist nicht bekannt. Eine Vermutung ist, dass der Dämpfungskolben dank der sauberen Führung und langen Führungslänge Vibrationen wirksamer abzudämpfen vermag, als bei bekannten Lösungen, und der Dämpfungskolben bei abzeichnender Vibrationstendenz stets so stabilisiert bleibt, dass das Sitzventilglied außerstande ist, radial oder axial zu vibrieren. Bauartbedingt lässt sich eine sehr lange Ventil-Feder einsetzen, die in einem relativ linearen und flachen Federratenbereich arbeitet, und, da sie nahezu direkt am Sitzventilglied und innerhalb der Führungslängen angreift, Vibrationen unterdrückt bzw. keine Vibrationen hervorruft. Die beiden Führungsbereiche sind funktionell voneinander getrennt. Jeder Führungsbereich wirkt effektiv, selbst wenn eine relativ lose Gleitpassung gewählt wird, um Druckmittel für die Dämpfungsfunktion des Dämpfkolbens durchgehen zu lassen. In der Niederdruckkammer ist angrenzend an den zweiten Führungsbereich zumindest eine Entlastungsöffnung vorgesehen, die als Drosselkanal fungieren kann, so dass das vom Dämpfungskolben bewegte Druckmittel dämpft. Die beiden Führungsbereiche ergänzen sich in ihren Wirkungen beim Führen des Dämpfungskolbens gegenseitig. Das Ventil ist kostengünstig und nur aus wenigen, einfach zu bearbeitenden Teilen herstellbar, beispielsweise aus Stahlteilen.

Bei einer zweckmäßigen Ausführungsform ist das Sitzventilglied ein Schließkegel. Alternativ könnte das Sitzventilglied jedoch auch eine ballige oder kugelige Sitzfläche haben oder eine eingepresste Kugel sein. Dadurch ist sichergestellt, dass selbst bei kleinem Öffnungsgrad das Druckmittel um den Umfang des Sitzes sehr gleichmäßig abspritzt und überall gleichförmig beschleunigt wird, so dass sich eine zentrische Resultierende ergibt, die vom Dämpfungskolben und der Feder wirksam abgestützt ist und keine seitlichen Vibrationen hervorruft.

Weiterhin kann es zweckmäßig sein, als Ventilfeder eine Schraubendruckfeder in einer Federaufnahme-Sackbohrung des Dämpfungskolbens unterzubringen, so dass die Feder einerseits gegen Ausknickbewegungen abgestützt wird, und andererseits zur Stabilisierung des Dämpfungskolbens beiträgt. Die von der Feder auf das Sitzventilglied aufgebrachte Kraft wird stets zentrisch und sauber axial übertragen, was dazu beiträgt, ein Betriebsgeräusch zu vermeiden.

Als flankierende Maßnahme können angrenzend an den Sitz im Wesentlichen radiale Ringflächen vorgesehen sein, die bei am Sitz anstehenden Sitzventilglied einen Spalt bilden. In diesen, relativ eng bemessenen Spalt schießt das Druckmittel beim Ansprechen des Ventils, wobei Energie abgebaut wird und kontrollierte Strömungsverhältnisse erzielt werden.

Die Gleitpassung des Dämpfungskolbens in der Niederdruckkammer kann relativ eng gewählt werden, falls sich entweder von der Umlenkfläche am Sitzventilglied oder vom Außenumfang des Dämpfungskolbens ein Drosselkanal in die Federaufnahme-Sackbohrung erstreckt. Dieser Drosselkanal wird in seiner Querschnittsweite auf die Querschnittsweite des Entlastungskanals abgestimmt, damit der Dämpfungskolben optimal wirkt.

Zweckmäßig beträgt die Führungslänge des Dämpfungskolbens in der Niederdruckkammer zwischen etwa 120 % bis 200 % des Führungsdurchmessers des Dämpfungskolbens. Besonders zweckmäßig liegt die Führungslänge bei etwa 150 % des Führungsdurchmessers.

Alternativ oder additiv kann es zweckmäßig sein, wenn der Sitzdurchmesser nur zwischen etwa 40 bis 75 % des Führungsdurchmessers des Dämpfungskolbens beträgt. Zweckmäßig liegt der Sitzdurchmesser bei etwa 50 % des Führungsdurchmessers. Diese geometrischen Verhältnisse haben sich als für die Dämpfung besonders optimal erwiesen.

Angrenzend an den Sitz ist mindestens ein Niederdruck-Auslass vorgesehen. Der Querschnitt der Entlastungsbohrung beim Dämpfungskolben ist kleiner als der Querschnitt des Niederdruck-Auslasses.

Um die Regelfunktion des Ventils zu verfeinern, kann es zweckmäßig sein, an der Niederdruckseite mehrere Niederdruckauslass-Mündungen dort vorzusehen, wo eine an den ersten Führungsbereich angrenzende Regelkante am Dämpfungskolben beim Öffnungshub des Sitzventilglieds diese Mündungen, vorzugsweise mengenregelend, allmählich freigibt. In anderen Worten bedeutet dies, dass der Abströmquerschnitt mit zunehmendem Öffnungshub allmählich zunimmt, weil die Mündungen blendenartig allmählich freigegeben werden.

In einer zweckmäßigen Ausführungsform ist das Ventil ein Einschraubventil mit einem Außengehäuse, in welchem das Sitzventilglied und die Feder durch einen eingepressten Ringeinsatz festgelegt sind.

Alternativ könnte der Ringeinsatz auch eingeschraubt oder durch einen Schraubeinsatz gesichert sein. Das gleiche Baukonzept des Ventils könnte jedoch auch in Blockbauweise realisiert werden. Um Verschmutzungen zurückzuhalten, wird zweckmäßig im offenen Ende des Außengehäuses ein Filter angeordnet.

Ausführungsformen des Erfindungsgegenstandes werden anhand der Zeichnung erläutert. Es zeigen:
- Fig. 1: einen Längsschnitt einer ersten Ausführungsform eines Ventils das als Einschraubventil ausgebildet und als Druckbegrenzungsventil oder Vorspannventil verwendbar ist,
- Fig. 2: einen Längsschnitt einer weiteren Ausführungsform,
- Fig. 3: einen Längsschnitt einer weiteren Ausführungsform des Ventils, und
- Fig. 4: einen Längsschnitt einer weiteren Ausführungsform.

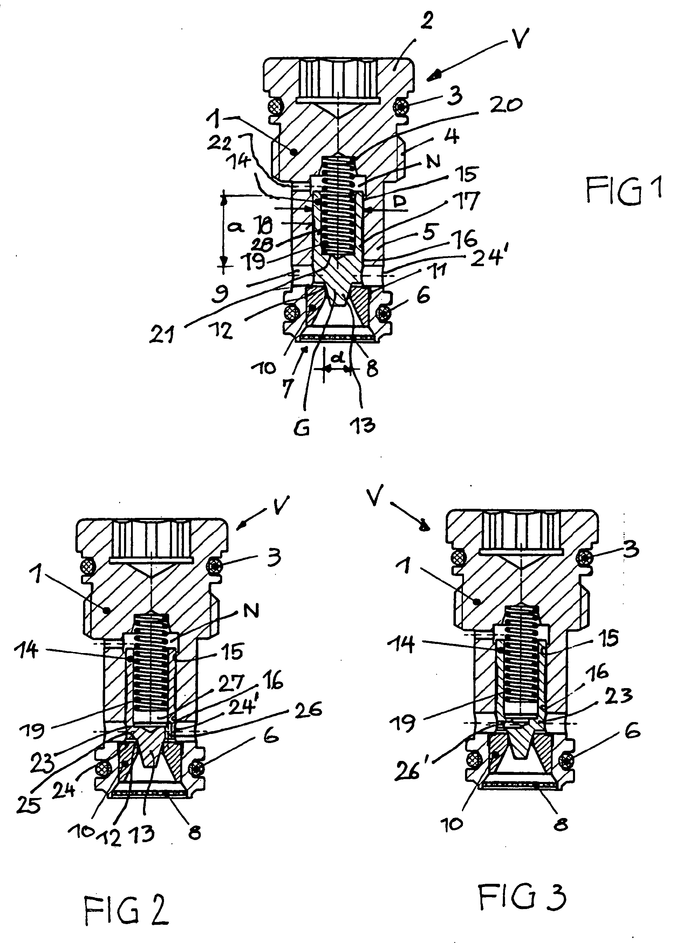

Das in Fig. 1 gezeigte Ventil V ist beispielsweise ein Vorspannventil oder ein Druckbegrenzungsventil. Als Vorspannventil kann das Ventil V beispielsweise auf einen Vorspannsdruck von 13 Bar ausgelegt sein, bei dem das Ventil anspricht und der an der untenliegenden Hochdruckseite des Ventils eingehalten wird, indem entsprechend Druckmittel von der Hochdruckseite zur Niederdruckseite abgelassen wird.

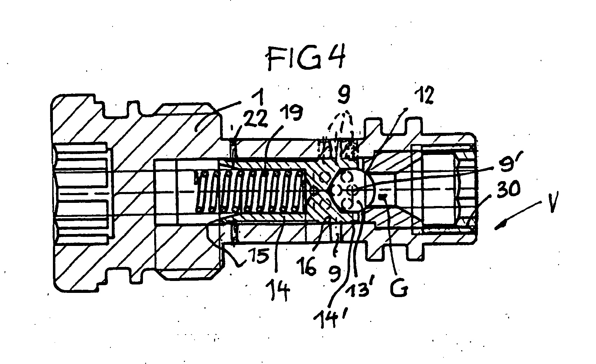

Das Ventil V ist als Einschraubventil ausgebildet, obwohl es in herkömmlicher Blockbauweise auch einen eigenen Ventilblock haben könnte. Das gezeigte Ventil V besitzt ein Außengehäuse 1, beispielsweise aus Stahl, mit einem Schraubkopf 2, einem Außengewinde 4 und Dichtbereichen 3, 6 (jeweils beispielsweise mit einem O-Ring). Ein unteres Ende 7 des schlankeren Außengehäuse-Teils 5 ist offen und enthält einen Filter 8. Ausgehend vom unteren Ende 7 ist eine Stufenbohrung eingebracht, in deren unterem, weiterem Endabschnitt ein Ringeinsatz 10 beispielsweise durch Einpressen (bei 11) festgelegt ist. Alternativ könnte z.B. der Ringeinsatz 10 auch eingeschraubt oder durch einen Schraubeinsatz 30 (Fig. 4) festgelegt sein. Der Ringeinsatz 11 definiert einen kreisförmigen Sitz 12 zwischen der Hochdruckseite und Niederdruckauslässen 9. Der obere, engere Abschnitt der Sackbohrung bildet eine Niederdruckkammer N, in der eine Ventil-Feder 19, ein Dämpfungskolben 14 und ein Ventilsitzglied G vom Ringeinsatz 10 unverlierbar festgelegt sind. Das Ventilsitzglied G ist in der gezeigten Ausführungsform ein Schließkegel 13, der einstückig mit dem Dämpfungskolben 14 ausgebildet ist, beispielsweise aus Stahl. Der Ringeinsatz 10 könnte auch aus Stahl bestehen, oder gegebenenfalls aus einem anderen Material. An den Sitz 12 schließt sich zur Hochdruckseite eine zylindrische Bohrung an, die sich zum Ende 7 hin konisch erweitert.

Der Dämpfungskolben 14 ist an der Innenwand der Niederdruckkammer N in einem ersten Führungsbereich 16 und in einem davon axial beabstandeten zweiten Führungsbereich 15 mit einer Gleitpassung geführt. Zwischen den beiden Führungsbereichen 15, 16 ist der Außenumfang des Dämpfungskolbens 14 bei 17 eingeschnürt. Die Innenwand der Niederdruckkammer N ist mit 18 angedeutet. Die Ventil-Feder 19 ist eine Schraubendruckfeder, die mit ihrem oberen Ende in einer Fassung 20 im Boden der Niederdruckkammer positioniert ist, und mit ihrem anderen Ende auf einem innenliegenden Boden 21 einer Federaufnahme-Sackbohrung 28 direkt aufsteht. Die Federaufnahme-Sackbohrung 28 ist am obenliegenden Ende des Dämpfungskolbens 14 offen, derart, dass sich die Feder 19 von der Fassung 20 tief in den Dämpfungskolben 14 hinein erstreckt und ihre Kraft möglichst nahe beim Ventilsitzglied G und zentrisch überträgt.

Am oberen Ende der Niederdruckkammer N ist ein Entlastungskanal 22 vorgesehen, dessen Querschnitt kleiner ist als die Querschnitte der Niederdruck-Auslässe 9.

Die Führungslänge a des Dämpfungskolbens 14 beträgt ca. 150 % des Führungsdurchmessers D des Dämpfungskolbens 14. Die Führungslänge a kann innerhalb eines Bereiches zwischen etwa 120 % und 200 % des Führungsdurchmessers D variieren. Der Durchmesser d des Sitzes 12 beträgt etwa 50 % des Führungsdurchmessers D des Dämpfungskolbens 14. Der Durchmesser d kann zwischen etwa 40 % und 75 % des Führungsdurchmessers D variieren.

Die Ausführungsform des Ventils V in Fig. 2 unterscheidet sich von der Ausführungsform in Fig. 1 dadurch, dass zusätzlich ein Drosselkanal 26 in etwa parallel zur Achse des Ventils bis in die Niederdruckkammer N verläuft. Ferner steht das untere Ende der Feder 19 nicht direkt auf dem Boden der Federaufnahme-Sackbohrung auf, sondern über eine Unterlage 27.

Angrenzend an den Sitz 12 ist am Ringeinsatz 10 eine radiale Ringfläche 24 geformt. Am Übergangsabschnitt 23 vom Schließkegel 13 in den Dämpfungskolben 14 ist eine zur Ringfläche 24 parallele Umlenkfläche 25 vorgesehen. Bei am Sitz 12 anstehendem Schließkegel 13 wird zwischen der Ringfläche 24 und der Umlenkfläche 25 ein enger Spalt gebildet. Der Drosselkanal 26 mündet in der Umlenkfläche 25. Die Ringfläche 24 und die Umlenkfläche 25 sind auch in der Ausführungsform in Fig. 1 vorgesehen, dort jedoch nicht näher hervorgehoben.

Die Ausführungsform des Ventils V in Fig. 3 unterscheidet sich von den vorhergehenden Ausführungsformen dadurch, dass der Drosselkanal 26' quer zur Achse des Ventils V im Übergangsabschnitt 23 gebohrt ist und in einer Ansenkung im Inneren des Dämpfungskolbens 14 endet. In den Fig. 2, 3 kann die Gleitpassung des Dämpfungskolbens 14 enger sein als in Fig. 1, so dass die Führung noch stabiler ist.

Die einzelnen Teile der verschiedenen Ausführungsformen sind kostengünstig herstellbar, da nur die Führungsbereiche 15, 16, die Sitzfläche des Ventilkegels 13, und gegebenenfalls der Sitz 12 geschliffen sind. Gegebenenfalls ist auch die Innenwand der Niederdruckkammer N einer Schleifbehandlung unterworfen. In diesen Bereichen kann es zweckmäßig sein, den Stahl zu härten.

Bei der Ausführungsform des Ventils V in Fig. 4 ist das Sitzventilglied G durch eine in den Dämpfungskolben 14 eingepresste Kugel 13' mit kugeliger Sitzfläche gebildet. Der Durchmesser der Kugel 13' ist größer als der Durchmesser des Sitzes 12, ist jedoch kleiner als der Führungsdurchmesser des Dämpfungskolbens 14. Die Entlastungsöffnungen 22 sind zwischen den beiden Führungsbereichen 15, 16 im Außengehäuse 1 gebohrt.

Ferner sind die Niederdruck-Auslässe 9 mehrere in Umfangsrichtung und in Axialrichtung verteilte Bohrungen, die innenliegende Mündungen 9' aufweisen, die von einer Steuerkante 14' angrenzend an den ersten Führungsbereich 16 des Dämpfungskolbens 14 beim Öffnungshub des Sitzventilgliedes G allmählich freigegeben werden.

## Patentansprüche

1. Ventil, insbesondere Vorspann- oder Druckbegrenzungsventil, mit einem axial durch eine Ventil-Feder (19) gegen einen zwischen einer Niederdruck- und einer Hochdruckseite angeordneten Sitz (12) beaufschlagten Sitzventilglied (G), das operativ mit einem Dämpfungskolben (14) zusammenwirkt und an der Niederdruckseite des Sitzes (12) in einer Niederdruckkammer (N) angeordnet ist, **dadurch gekennzeichnet, dass** der Dämpfungskolben (14) mit dem Sitzventilglied (G) starr verbunden und zusammen mit der Ventil-Feder (19) in der Niederdruckkammer (N) angeordnet ist, dass der Dämpfungskolben (14) direkt an der Innenwand der Niederdruckkammer (N) in einem ersten umfänglichen Führungsbereich (16) nahe dem Sitzventilglied (G) und in einem separaten, axial vom ersten Führungsbereich (16) und von dem Sitzventilglied(G) beabstandeten zweiten, gleichdurchmessrigen Führungsbereich (15) jeweils mit Gleitpassung geführt ist und für die Dämpfungsfunktion mit wenigstens einem in der Niederdruckkammer (N) angrenzend an den zweiten Führungsbereich (15) angeordneten Entlastungsöffnung (22) für Niederdruck-Druckmittel zusammenwirkt, und dass die Ventil-Feder (19) am Dämpfungskolben (14) beim ersten Führungsbereich (16) angreift.

2. Ventil nach Anspruch 1, **dadurch gekennzeichnet, dass** das Sitzventilglied (G) ein Schließkegel (13) oder eine eingepresste Schließkugel (13') oder eine angeschliffene Schließkugel (13") ist.

3. Ventil nach Anspruch 1, **dadurch gekennzeichnet, dass** die Ventil-Feder (19) eine Schraubendruckfeder ist, deren eines Ende in einer Fassung (20) im Boden der Niederdruckkammer (N) sitzt, und dass die Ventil-Feder (19) in eine zylindrische Federaufnahme-Sackbohrung (28) des Dämpfungskolbens (14) eingreift und mit ihrem anderen Ende auf einem Boden (21) der Federaufnahme-Sackbohrung direkt oder über eine Unterlage (27) aufsteht.

4. Ventil nach Anspruch 1, **dadurch gekennzeichnet, dass** die Entlastungsöffnung (22) auf der dem ersten Führungsbereich (16) abgewandten oder zugewandten Seite des zweiten Führungsbereichs (15) angeordnet ist.

5. Ventil nach Anspruch 1, **dadurch gekennzeichnet, dass** der Sitz (12) an der zum Sitzventilglied (G) weisenden Seite eine zur Achse des Ventils (V) im Wesentlichen senkrechte Ringfläche (24) aufweist, dass am Sitzventilglied (G) oder an einem Übergangsabschnitt (23) vom Sitzventilglied in den Dämpfungskolben (14) eine zur Ringfläche (24) parallele Umlenkfläche (25) vorgesehen ist, und dass bei am Sitz anstehendem Sitzventilglied (G) zwischen der Ringfläche (24) und der Umlenkfläche (55) ein Spalt vorgesehen ist.

6. Ventil nach Anspruch 5, **dadurch gekennzeichnet, dass** sich, vorzugsweise ausgehend von der Umlenkfläche (25), ein Drosselkanal (26) in den Dämpfungskolben (14) erstreckt.

7. Ventil nach Anspruch 1, **dadurch gekennzeichnet, dass** sich vom Außenumfang des Dämpfungskolbens (14) ein Drosselkanal (26') in den Dämpfungskolben (14) hinein erstreckt.

8. Ventil nach Anspruch 1, **dadurch gekennzeichnet, dass** die durch die ersten und zweiten Führungsbereiche (15, 16) definierte Führungslänge (a) des Dämpfungskolbens (14) in der Niederdruckkammer (N) zwischen etwa 120 % bis 200 %, vorzugsweise etwa 150 %, des Führungsdurchmessers (D) des Dämpfungskolbens (14) in den Führungsbereichen (15, 16) beträgt.

9. Ventil nach Anspruch 1, **dadurch gekennzeichnet, dass** der Sitzdurchmesser (d) zwischen etwa 40 % bis 75 %, vorzugsweise etwa 50 %, des Führungsdurchmessers (D) des Dämpfungskolbens (14) beträgt.

10. Ventil nach Anspruch 1, **dadurch gekennzeichnet, dass** der Querschnitt der Entlastungsöffnung (22) kleiner ist als der wenigstens eines Niederdruck-Auslasses (9) aus der Niederdruckkammer (N).

11. Ventil nach Anspruch 1, **dadurch gekennzeichnet, dass** an der Niederdruckseite des Sitzes (12) mehrere Niederdruck-Auslassmündungen (9') so in Umfangsrichtung und Axialrichtung verteilt vorgesehen sind, dass eine an den ersten Führungsbereich (16) angrenzende Regelkante (14') am Dämpfungskolben (14) beim Öffnungshub des Sitzventilglieds (G) diese Mündungen mengenregelnd allmählich freigibt.

## Claims

1. Valve, in particular prestress valve or pressure-limiting valve, having a seat valve element (G) which is loaded axially by a valve spring (19) against a seat (12) arranged between a low-pressure side and a highpressure side, interacts operatively with a damping piston (14) and is arranged on the low-pressure side of the seat (12) in a low-pressure chamber (N),
**characterized in that** the damping piston (14) is rigidly connected to the seat valve element (G) and is arranged together with the valve spring (19) in the low-pressure chamber (N), **in that** the damping piston (14) is guided directly on the inner wall of the low-pressure chamber (N) in a first circumferential guide region (16) close to the seat valve element (G) and in a separate second guide region (15) of the same diameter which is spaced apart axially from the first guide region (16) and from the seat valve element (G), in each case with a sliding fit, and, for the damping function, interacts with at least one relief opening (22) for low-pressure pressure medium, which relief opening (22) is arranged in the low-pressure chamber (N) adjacent to the second guide region (15), and **in that** the valve spring (19) acts on the damping piston (14) at the first guide region (16).

2. Valve according to Claim 1, **characterized in that** the seat valve element (G) is a closing cone (13) or a pressed-in closing ball (13') or a ground closing ball (13'').

3. Valve according to Claim 1, **characterized in that** the valve spring (19) is a compression coil spring, one end of which is seated in a mount (20) in the base of the low-pressure chamber (N), and **in that** the valve spring (19) engages into a cylindrical spring-receptacle blind bore (28) of the damping piston (14) and rests with its other end on a base (21) of the spring-receptacle blind bore, directly or via a support (27).

4. Valve according to Claim 1, **characterized in that** the relief opening (22) is arranged on that side of the second guide region (15) which faces, or faces away from, the first guide region (16).

5. Valve according to Claim 1, **characterized in that**, on the side which points towards the seat valve element (G), the seat (12) has an annular face (24) which is substantially perpendicular with respect to the axis of the valve (V), **in that** a deflecting face (25) which is parallel to the annular face (24) is provided on the seat valve element (G) or on a transitional section (23) from the seat valve element into the damping piston (14), and **in that** a gap is provided between the annular face (24) and the deflecting face (55) when the seat valve element (G) bears against the seat.

6. Valve according to Claim 5, **characterized in that** a throttling channel (26) extends into the damping piston (14), preferably starting from the deflecting face (25).

7. Valve according to Claim 1, **characterized in that** a throttling channel (26') extends from the outer circumference of the damping piston (14) into the damping piston (14).

8. Valve according to Claim 1, **characterized in that** the guide length (a) of the damping piston (14) in the low-pressure chamber (N), which guide length (a) is defined by the first and second guide regions (15, 16), is between approximately 120% and 200%, preferably approximately 150%, of the guide diameter (D) of the damping piston (14) in the guide regions (15, 16).

9. Valve according to Claim 1, **characterized in that** the seat diameter (d) is between approximately 40% and 75%, preferably approximately 50%, of the guide diameter (D) of the damping piston (14).

10. Valve according to Claim 1, **characterized in that** the cross section of the relief opening (22) is smaller than that of at least one low-pressure outlet (9) out of the low-pressure chamber (N).

11. Valve according to Claim 1, **characterized in that** a plurality of low-pressure outlet openings (9') are provided on the low-pressure side of the seat (12), distributed in the circumferential direction and axial direction in such a way that a regulating edge (14') which adjoins the first guide region (16) gradually opens these openings in a quantity-regulating manner on the damping piston (14) during the opening stroke of the seat valve element (G).

## Revendications

1. Soupape, en particulier soupape de précharge ou de limitation de pression, comportant un élément de soupape à siège (G) sollicité de manière axiale par un ressort de soupape (19) contre un siège (12) disposé entre un côté basse pression et un côté haute pression, lequel élément de soupape à siège interagit de manière fonctionnelle avec un piston d'amortissement (14) et est disposé du côté basse pression du siège (12) dans une chambre basse pression (N), **caractérisée en ce que** le piston d'amortissement (14) est relié fixement à l'élément de soupape à siège (G) et est disposé conjointement avec le ressort de soupape (19) dans la chambre basse pression (N), **en ce que** le piston d'amortissement (14) est guidé respectivement avec ajustement glissant directement dans la paroi intérieure de la chambre basse pression (N) dans une grande première zone de guidage (16) à proximité de l'élément de la soupape à siège (G) et dans une seconde zone de guidage (15) de même diamètre, indépendante et espacée de manière axiale de la première zone de guidage (16) et de l'élément de soupape à siège (G) et **en ce qu'**il interagit pour la fonction d'amortissement avec au moins une ouverture de décharge (22) pour le milieu de pression à basse pression, disposée dans la chambre basse pression (N) de manière adjacente à la seconde zone de guidage (15), et **en ce que** le ressort de soupape (19) vient en prise avec le piston d'amortissement (14) dans la première zone de guidage (16).

2. Soupape selon la revendication 1, **caractérisée en ce que** l'élément de soupape à siège (G) est un cône de fermeture (13) ou une bille de fermeture (13') pressée ou une bille de fermeture (13") affûtée.

3. Soupape selon la revendication 1, **caractérisée en ce que** le ressort de soupape (19) est un ressort hélicoïdal de compression, dont l'une des extrémités se trouve dans une monture (20) dans le fond de la chambre basse pression (N), et **en ce que** le ressort de soupape (19) vient en prise dans un alésage borgne cylindrique (28) du piston amortisseur (14) et s'appuie par son autre extrémité sur un fond (21) de l'alésage borgne pour la réception du ressort directement ou par l'intermédiaire d'une base (27).

4. Soupape selon la revendication 1, **caractérisée en ce que** l'ouverture de décharge (22) est disposée sur le côté de la seconde zone de guidage (15), opposé à ou tourné vers la première zone de guidage (16).

5. Soupape selon la revendication 1, **caractérisée en ce que** le siège (12) présente sur le côté s'orientant vers l'élément de soupape à siège (G) une face annulaire (24) essentiellement perpendiculaire à l'axe de la soupape (V), **en ce qu'**une face déflectrice (25) parallèle à la face annulaire (24) est prévue sur l'élément de soupape à siège (G) ou sur un segment de passage (23) partant de l'élément de soupape à siège dans le piston d'amortissement (14), et **en ce qu'**une fente est prévue entre la face annulaire (24) et la face déflectrice (25) lorsque l'élément de soupape à siège (G) se trouve au niveau du siège.

6. Soupape selon la revendication 5, **caractérisée en ce qu'**un canal d'étranglement (26) s'étend de préférence en partant de la face déflectrice (25) dans le piston d'amortissement (14).

7. Soupape selon la revendication 1, **caractérisée en ce qu'**un canal d'étranglement (26') s'étend depuis la périphérie extérieure du piston d'amortissement (14) jusqu'à l'intérieur du piston d'amortissement (14).

8. Soupape selon la revendication 1, **caractérisée en ce que** la longueur de guidage (a) du piston d'amortissement (14) définie par les première et seconde zones de guidage (15, 16) est comprise entre environ 120 % et 200 % du diamètre de guidage (D) du piston d'amortissement (14), de préférence est égale à 150 % du diamètre de guidage (D) du piston d'amortissement (14) dans les zones de guidage (15, 16) dans la chambre basse pression (N).

9. Soupape selon la revendication 1, **caractérisée en ce que** le diamètre du siège (d) est compris entre environ 40 % et 75 % du diamètre de guidage (D) du piston d'amortissement (14), et est égal de préférence à environ 50 % de ce dernier.

10. Soupape selon la revendication 1, **caractérisée en ce que** la section transversale de l'ouverture de décharge (22) est plus petite que celle de la sortie basse pression (9) de la au moins une chambre basse pression (N).

11. Soupape selon la revendication 1, **caractérisée en ce que** plusieurs bouches de sortie basse pression (9') sont prévues de manière répartie du côté basse pression du siège (12) dans la direction périphérique et dans la direction axiale de telle manière qu'une arête de réglage (14') adjacente à la première zone de guidage (16) libère progressivement, tout en réglant la quantité, ces bouches au niveau du piston d'amortissement (14), lors de la course d'ouverture de l'élément de soupape à siège (G).
